(19) Europäisches Patentamt
European Patent Office
Office européen des brevets

(11) **EP 3 933 338 A1**

(12) **EUROPEAN PATENT APPLICATION**

(43) Date of publication:
**05.01.2022 Bulletin 2022/01**

(51) Int Cl.:
*G01B 11/24* (2006.01)  *G01B 21/04* (2006.01)
*G06T 7/60* (2017.01)  *B23Q 17/24* (2006.01)

(21) Application number: **21382490.7**

(22) Date of filing: **02.06.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.07.2020 ES 202030677 U**

(71) Applicant: **Ideko, S.Coop.**
**20870 Elgoibar Guipuzcoa (ES)**

(72) Inventors:
• **PUERTO MANRIQUE, Pablo**
**20870 Elgoibar (Guipuzcoa) (ES)**
• **LEIZEA ALONSO, Ibai**
**20870 Elgoibar (Guipuzcoa) (ES)**
• **MENDIKUTE GARATE, Alberto**
**20870 Elgoibar (Guipuzcoa) (ES)**

(74) Representative: **Plasseraud IP**
**66, rue de la Chaussée d'Antin**
**75440 Paris Cedex 09 (FR)**

(54) **SYSTEM AND PROCESS FOR CONTROLLING THE UNCERTAINTY OF A PHOTOGRAMMETRIC METER**

(57)    A system and process for applying same which enables the user to predict and control in a simple, fast and secure way the uncertainty of a photogrammetric meter, of those used for measuring and even more specifically of those used to measure large parts before the machining thereof or in other applications wherein such measurement of large parts is required. It consists of creating a geometric figure "F" by means of the corresponding software, the program calculating with respect to a photograph or photographs taken by the user of at least one marker (2) arranged on the part (1) to be measured, displaying said geometric figure "F" on the corresponding screen according to said calculation, which enables the user to know the degree of accuracy corresponding to the photographed marker (2) and thus control the uncertainty of the photogrammetric meter.

FIG. 1

FIG. 5

## Description

### Technical field

The present invention is related to metrology applications in industry and more specifically to photogrammetry systems used for measuring and even more specifically to photogrammetry systems used to measure large parts before the machining thereof or in other applications wherein such measurements are required.

Since the machining of large parts is one of the main applications for photogrammetry systems, we are going to refer to this application without it being understood in a limiting sense.

### State of the art

Parts with a great length and, consequently, a large volume, may have been formed, for example, in a smelting or welding process and it is often necessary to carry out a subsequent machining process on them. These large parts may have, for example, an absence of material in some of the portions thereof and it is necessary to add the missing material. This must be done, however, before starting the machining, since otherwise, stopping the machine during machining entails a great loss of working time of the machine. Another possible casuistry is the geometric and dimensional quality control of the parts.

Therefore, in industrial environments, there is a need to measure and align industrial parts that are considered high-range and that are to be machined. The measurement and the previous alignment of the part is necessary to, among other reasons, guarantee that there is enough over material on all the surfaces to be machined, calculate the blank alignment of the part and achieve an optimal distribution of over material, and position and adjust the part on the machine. These blanks often do not have any reliable surface or feature reference that can be used for alignment on the machine. However, the initial alignment of the part on the machine is critical, as misalignment will result in poor quality machining that is associated with ruining the part or involving a costly restoration process. Alignment is not the only application to consider; there are other applications such as part expansions, part assemblies that are also related to the present invention, although we refer to measurement and alignment only for the purpose of descriptive simplicity.

To measure and align parts of this type, different measurement systems can be used, including photogrammetry. The applicant of the present invention is the holder of European Patent EP2570236, which includes a photogrammetry process for high-range parts.

In these measurement systems, images from the camera are calculated together and the user has to move around the entire part to obtain the photographs that will be used to finally obtain the specific measurements of the high-range part.

In the current development of these photogrammetry systems, conventional digital cameras are used and measurement elements are arranged relative to the measurement points on the part to be measured, elements which we will identify from now on as markers and which can be made up of retro reflective stickers with or without identifying codes. In addition to these markers, auxiliary elements are used, consisting of calibrated scale bars, which we will identify as scale bars, and multi-code hemispheres, which we will identify as hemispheres.

With the measuring elements (markers) and auxiliary elements (bars and, where appropriate, hemispheres) already placed properly, the user must take photographs of each marker, the person taking said photographs moving around the part to be measured. The traceability of the measurement is provided by the scale bars present on the scene and by the calibration of the camera as a measuring instrument.

These photographs are entered in the corresponding program, with which the photogrammetry process will be developed, which leads in practice to an iterative review that requires a lot of time and depends on the user who must reprocess the methods until an adequate set of images is taken, limiting the potential thereof for speed.

In addition, an important problem arises which affects the final results obtained and, ultimately, the reliability and credibility of the photogrammetry process for these applications in large parts. In fact, the problem is that even though the end user is instructed and given tutorials for that purpose, he or she does not take photographs of each marker with the proper orientation and/or distance, all of which leads to unsatisfactory results.

In other words, the rules already exist and are known, but until now, due to the difficulty of following them in large volume or highly complex parts, the end user does not fulfil them and this leads to unsatisfactory results. In view of this problem, a solution is necessary and this is the object of the present invention.

### Object of the invention

The object of the present invention is a system and the process for applying same which enables the user to predict and control the uncertainty of a photogrammetric meter in a simple, fast and secure way. If users always followed the rules, the present invention would not make sense. However, due to the difficulty of following them in large volume or highly complex parts, the innovation lies in offering the user a system so that he or she can fulfil them and, above all, know the uncertainty of the results almost immediately.

In order to meet this objective and solve the technical problems discussed so far, in addition to providing additional advantages that may be derived later on, the present invention provides the following system and the process for applying it:

Firstly, it starts with work to be carried out by the user, work that is part of the state of the art and not the object of the invention. This work consists of the user preparing a 3D CAD, in order to define the different areas of the part to be measured, and these drawings being entered in software prepared for this purpose which will automatically indicate the ideal points where the markers and auxiliary elements should be placed.

In addition, the user establishes the degree of accuracy that he or she requires for that particular job. To do this, he or she starts with a data element that is the "accuracy of the equipment". This value is obtained by applying a formula in which the data provided by the manufacturer of the photogrammetric system to be used and the length of the part are entered. The photographic camera to be used can be a conventional camera. With the "accuracy of the equipment", the user can choose a degree of accuracy comprised within a range, wherein the value of maximum accuracy is that of the "accuracy of the equipment" and the value of minimum accuracy is a value above which satisfactory results are not obtained.

The degree of accuracy that the user thus establishes must be comprised within that range and will be identified as the degree of "required accuracy".

At this point, what actually makes up the object of the present invention begins, according to which and in a first phase, the user, with his or her photo camera, takes at least two consecutive photos of one same marker, in what can be considered a prior process. He or she takes them from positions chosen according to his or her criteria, but based on pre-existing general rules available to the user. The two photos are taken from different points and with different orientation.

These two photos are entered in software of hardware that can even be a personal PC. This software, with the first two photos needed to solve a marker, calculates a geometric figure to calculate the uncertainty in process and displays that geometric figure on the screen, right after taking the image.

This geometric figure must have at least two axes, a major axis and a minor axis. This geometric figure is preferably an ellipse if it is seen in two dimensions and an ellipsoid if it is seen in three dimensions, but it could be any geometric figure that has two axes, such as a tapered/spindle figure, a rhombus/rhomboid, etc. For simplicity of description, the geometric figure that we are going to identify from now on as the ellipse, without limitation, represents the probabilities of where and how that marker has been solved. During imaging, multiple markers can be solved at the same time, but the rule is individually applied to each marker.

In the ellipse of each marker, the rule that the ratio between the major axis and the minor axis thereof corresponds to the ratio between the "required accuracy" and the "accuracy of the equipment", the value of this ratio not being exceeded, must be fulfilled.

In addition, a second rule must be fulfilled, which is based on the size of the geometric figure obtained. According to this second rule, the measurement of each semi-axis of the geometric figure must not exceed the value of the "required accuracy".

If these two rules are fulfilled, the program establishes that the required degree of accuracy has been reached and it provides the user with relevant information, which can be optical, acoustic or a combination of both; so that, for example and as a non-limiting preferred option, it identifies the level of fulfilment of the required degree of accuracy with a colour code.

If the required degree of accuracy has been reached by the user (ratio of the axes of the ellipse and size of the geometric figure), this first phase and the process are completed.

If the required degree of accuracy is not reached in the first phase, the second phase occurs, wherein the user takes at least one new photo, from another position chosen according to his or her criteria, but based on general pre-existing rules that are already available to the user.

Once this photograph is taken, within the second phase, the software re-calculates the ellipse and displays it on the screen. If the required degree of accuracy is fulfilled, the process for that marker would be completed. If not, the user must position him or herself with the focal axis of the camera as close as possible to perpendicularity with respect to the major axis of the new ellipse and take a new photograph, repeating the entire process, to reach the "required accuracy".

It is practically impossible to reach the accurate angle, but this is not important; what is important is to check how we approach the required degree of accuracy until it is reached. For this reason, photographs continue to be taken until the degree of "required accuracy" is reached. Accordingly, it can be stated that there is no control over whether the photo has been taken from the indicated position, but rather there is control over the contribution to reducing uncertainty.

The process is iterative in nature; in other words, it involves solving a problem by means of successive approximations to the solution, starting from an initial estimate.

Once we have reached the degree of "required accuracy" for a specific marker, we move on to the next one. If several markers appear in a photograph, several markers can be solved at the same time; as such, the software eliminates those markers that fulfil the degree of "required accuracy" from the process, considering them to be good.

A possibility has been envisaged where the software itself will discard the photographs that are not good or it offers indicators so that the user can reject them. As an alternative, all photographs enter the program and this program determines which photographs are better, thus being indicated as more "weighty" photographs, and it works more on these photographs than on the rest, making a weighted average of all of them.

**Description of the figures**

Figure 1 is a perspective view that schematically shows the measurement of a large part (1).

Figure 2 is a view like the preceding one but now of a large part (1) that is larger and more complex than that of Figure 1.

Figure 3 is a flow chart of the process object of the present invention.

Figure 4 schematically shows how the geometric figure "F" must evolve to end up fulfilling the two rules established by the present invention.

Figure 5 is the view of a diagram showing how the orientation of the focal axis of the camera "C" changes with respect to the major axis (A1) of the geometric figure "F" during the second phase.

Figure 6 is also a schematic view showing the camera "C" arranged with the focal axis (6) thereof at an angle "$\alpha$" of practically 90° with respect to the major axis (A1) of the geometric figure "F".

**Detailed description of the invention**

The present invention relates to a system and the process for applying same that enables the user to predict and control in a simple, fast and secure way the uncertainty of a photogrammetric meter, of those used for measuring and even more specifically of those used to measure large parts before the machining thereof or in other applications wherein such measurement of large parts is required.

Firstly, it starts with work to be carried out by the user, work that is part of the state of the art and not the object of the invention. This work consists of the user preparing a 3D CAD, in order to define the different areas of the part (1) to be measured, and these drawings being entered in a software prepared for this purpose which will automatically indicate the ideal points where the corresponding markers (2) and auxiliary elements (3 and 5) should be placed.

The user then establishes the degree of accuracy that he or she requires for that particular job. To do this, he or she starts with a data element that is the "accuracy of the equipment". This value is obtained by applying a formula in which the data provided by the manufacturer of the photogrammetric system to be used and the length of the part are entered. The photographic camera to be used can be a conventional camera.

The object of the present invention is applicable to any photogrammetric system, although and as a possible non-limiting practical exemplary embodiment in this description, it starts with the application thereof to the photogrammetric system known under the "VSet" Trademark owned by the applicant of this invention.

Also and as a non-limiting practical exemplary embodiment, the "VSet" system has been used with a Nikon Model D500 photo camera that includes a "Nikon AF Nikkor 24 mm. f/2.8D" lens.

To calculate the "accuracy of the equipment", the following formula is applied:

$$\text{"Accuracy of the equipment"} = V1 + V2 \times L/1{,}000$$

Wherein:

V1 is the value in microns ($\mu$m) that reflects the minimum value of the error that can be committed.

V2 is a value that depends on the length of the parts to be measured and is expressed in microns per metre ($\mu$m. / m). L is the maximum length in mm of the part to be measured.

With the "VSet" system and the aforementioned camera, it has been experimentally demonstrated that for parts up to 15 metres in length the values of "V1" and "V2" are:

V1 = 50 microns.
V2 = 20 microns/metre.

Accordingly, for example, for a part that is two metres in length, the "accuracy of the equipment" would be:

$$\text{"Accuracy of the equipment"} = 50 + 20 \times 2{,}000 / 1{,}000 = 90 \ \mu\text{m}.$$

In the case of a part that is 10 metres in length, the value of the "accuracy of the equipment" would be:

$$\text{"Accuracy of the equipment"} = 50 + 20 \times 10{,}000 / 1{,}000 = 250 \ \mu\text{m}.$$

With the "accuracy of the equipment" thus known, the user can choose a degree of accuracy that will be identified as the degree of "required accuracy" that must be comprised within a range, wherein the value of maximum accuracy is that of the "accuracy of the equipment" and the value of minimum accuracy is a value above which satisfactory results are not obtained. This value of minimum accuracy has been established at one thousand microns (1,000 $\mu$m.).

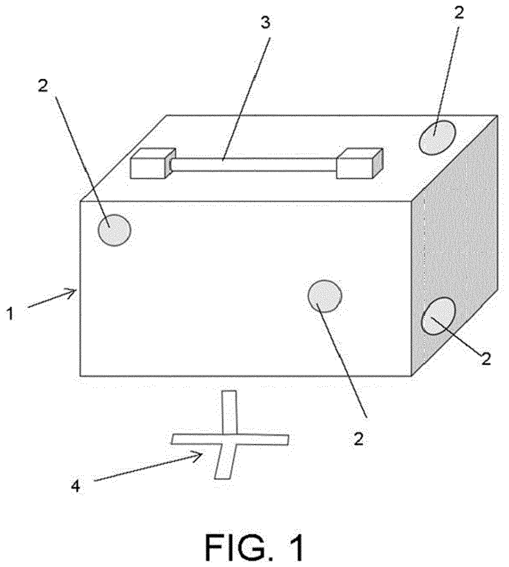

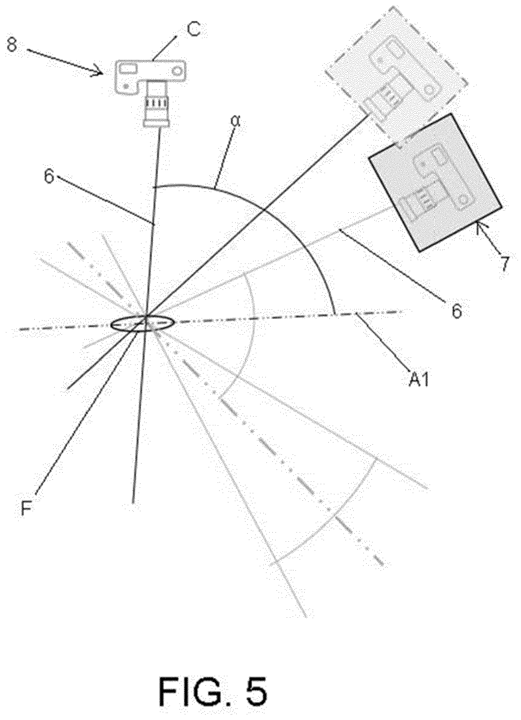

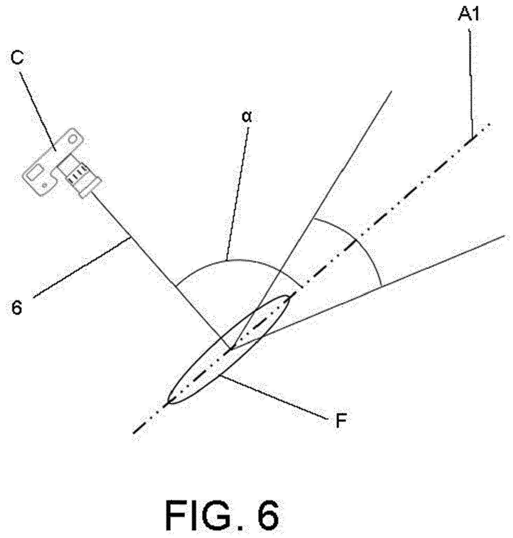

Figure 1 represents a large part to be measured, identified with the numerical reference (1). In this part (1), the user, following pre-established rules and guidelines, places a series of markers (2) on it that can be made up of retro reflective stickers with identifying codes. In addition to these markers (2), an auxiliary element is used which in this case is a calibrated scale bar (3) and a crosshead (4) is placed on the ground which shows the direction of three Cartesian axes and which has the aim of providing an origin to the measurement, helping the user to properly orient the focal axis (6) of his or her camera, identified in Figures 5 and 6 with the letter "C".

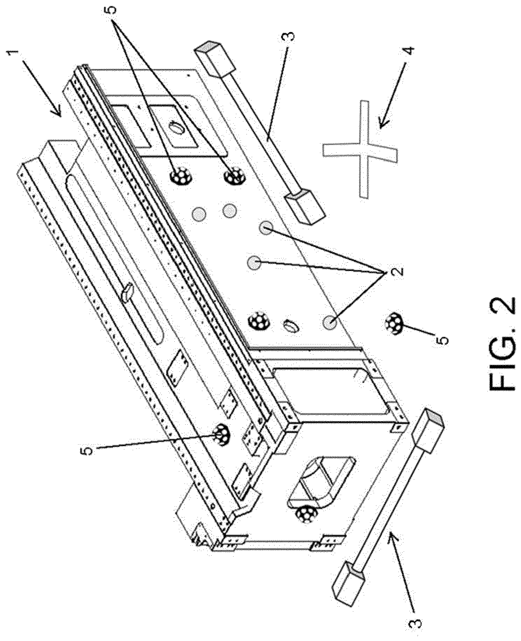

Figure 2 shows another application example, in this case relative to a part (1) that is larger and more complex than the preceding one. In this case, the corresponding markers (2) are arranged on the part (1) again and as auxiliary elements, in addition to two calibrated bars (3), multi-code hemispheres (5) are used in this case, which will be identified as hemispheres (5), which can be arranged on the part (1) and/or on the ground around it.

The use of the markers (2) and the auxiliary elements formed by the calibrated bars (3) and the hemispheres (5), as well as the arrangement thereof with respect to the part (1) is something totally conventional within photogrammetry systems, such as "VSet".

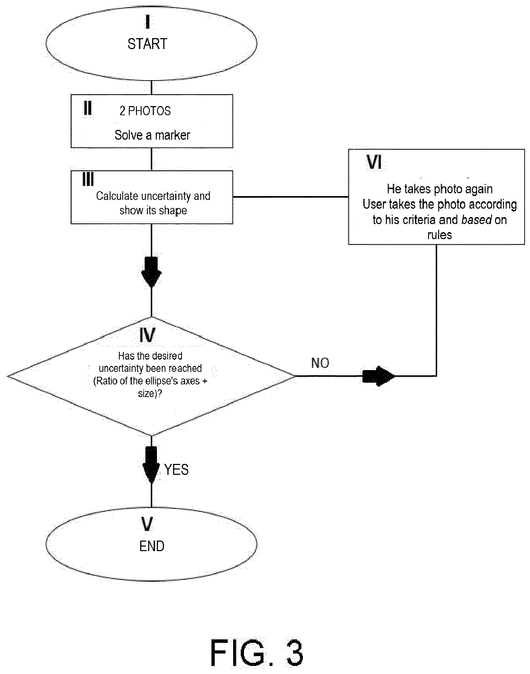

At this point, what essentially makes up the object of the present invention begins, according to which and in a first phase, the user, with his or her photo camera "C", moves around the part (1), in what is the beginning of the process/system and what is represented as step (I) in the flow chart of Figure 3.

From two positions chosen by the user, the user takes at least two consecutive photos of one same marker (2), in what can be considered a prior process. He or she takes them from positions chosen according to his or her criteria, but based on pre-existing general rules available to the user. The two photos are taken from different points and with different orientation, but always aiming at one same marker (2) which is the one to be solved. This step is indicated by table (II) in Figure 3.

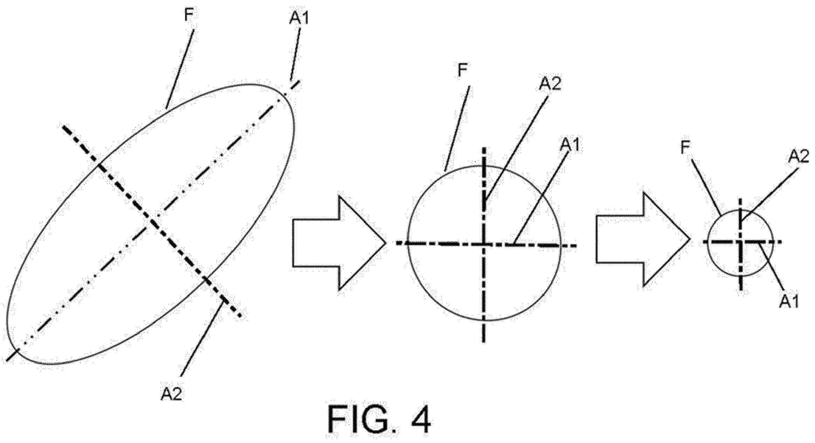

The two photos of one same marker (2) are entered in software of hardware that can even be a personal PC. This software, with the first two photos needed to solve this marker (2), calculates a geometric figure, identified with the letter "F" in Figure 4, to calculate the uncertainty in process and displays that geometric figure "F" on the screen, right after taking these two photographs, in what constitutes the step indicated by table (III) of the flow chart in Figure 3.

The geometric figure "F" must have at least two axes, a major axis (A1) and a minor axis (A2). This geometric figure "F" is preferably an ellipse, if it is seen in two dimensions, and an ellipsoid, if it is seen in three dimensions, but it could be any geometric figure that has two axes, such as a tapered/spindle figure, a rhombus/rhomboid, etc. The geometric figure "F" represents the probabilities of where and how that marker (2) photographed in step (II) has been solved. During imaging, multiple markers (2) can be solved at the same time, but the rules are individually applied to each marker (2).

In the geometric figure "F" of each marker (2), the rule that the ratio between the major axis (A1) and the minor axis (A2) thereof corresponds to the ratio between the "required accuracy" and the "accuracy of the equipment"; so that the former ratio must never exceed the value of the latter, must be fulfilled.

In addition, a second rule must be fulfilled, which is based on the size of the geometric figure obtained. According to this second rule, the measurement of each semi-axis of the major axis (A1) and of the minor axis (A2) of the geometric figure "F" must not exceed the value of the "required accuracy".

If these two rules are fulfilled, the program establishes that the degree of "required accuracy" has been reached by the user and it provides the user with relevant information, which can be optical, acoustic or a combination of both; such that, for example and as a non-limiting preferred option, it identifies the level of fulfilment of the required degree of accuracy with a colour code. This step is indicated by table (IV) of the flow chart in Figure 3.

If the degree of "required accuracy" has been reached by the user, this first phase and the process are completed, as indicated in step (V) in Figure 3.

If the required degree of accuracy is not reached in the first phase, the second phase occurs, wherein the user takes at least one new photo, also of the same marker (2) to be solved, from another position chosen according to his or her criteria, but based on general pre-existing rules that are already available to the user. This is represented by table (VI) of the flow chart of Figure 3.

Once this photograph from this second phase has been taken, this new photo is entered in the software, in what constitutes the step indicated by table (III) of the flow chart of Figure 3 and the software re-calculates the geometric figure "F" and displays it on the screen.

If the degree of "required accuracy" is fulfilled, the process would be completed. If not, the user must position him or herself with the focal axis (6) of the camera "C" as close as possible to perpendicularity with respect to the major axis (A1) of the new geometric figure "F" and take a new photograph, repeating the entire process. This is indicated in the diagrams of Figures 5 and 6. Figure 5 represents how in the second phase the user takes a photograph from the position indicated with the numerical reference (7) and once this photograph has been entered in the software, step (III) of the flow chart of Figure 3, this software displays a geometric figure "F" showing that the focal axis (6) of the camera "C" does not form a 90° angle with the major axis (A1) of the geometric figure "F" and the degree of "required accuracy" has not been reached; thus, the user moves with his or her camera "C" to a new position, indicated with the numerical reference (8), in which the focal axis (6) of camera "C" now forms an angle "$\alpha$" with the major axis (A1) which is very close to 90°.

From this new position, he or she takes a second photograph, again of the same marker (2) to be solved, which entered in the software, step (III) of the flow chart of Figure 3, said software solves that marker (2) and displays a new geometric figure "F", as shown in Figure 6; in this case the focal axis (6) of the camera "C" if it forms an angle "$\alpha$" with the major axis (A1) that either coincides or is very close to the value of 90° and the solved geometric figure "F" if it fulfils the two aforementioned rules and, consequently, the degree of "required accuracy".

If with this second photograph of this second phase, the degree of "required accuracy" is not reached by the user either, a third photograph should be taken, again of the same marker (2) and the process should be repeated, continuing until reaching, for each marker (2), the degree of "required accuracy".

Figure 4 schematically represents how the geometric figure "F" solved for a marker (2) within the second phase initially adopts an ellipse shape with a major axis (A1) and a minor axis (A2) that, presumably, does not fulfil the rule that the ratio between the major axis (A1) and the minor axis (A2) corresponds to the ratio between the "required accuracy" and the "accuracy of the equipment" and therefore, a new photograph must be taken which, once solved, displays a geometric Figure "F" on the screen which is now approaching or is a circle in which the first rule is fulfilled, where the ratio between the major axis (A1) and the minor axis (A2) corresponds to the ratio between the "required accuracy" and the "accuracy of the equipment", not exceeding this value; but now that geometric figure "F" is still very large, such that the second rule based on the size of the geometric figure "F" obtained is not fulfilled. According to this second rule, the measurement of each semi-axis of the major axis (A1) and of the minor axis (A2) of the geometric figure "F" must not exceed the value of the "required accuracy".

By failing to fulfil this second rule, a new photograph must be taken which, once solved by the software, displays the third figure on the screen, which is again a circular figure, but wherein the two technical rules are now fulfilled, that of the ratio between the axes (A1 and A2) and the size of the geometric figure "F", such that the process is considered to be satisfactorily completed.

It is practically impossible to reach the accurate angle "$\alpha$", but this is not important; what is important is to check how we approach the required degree of accuracy until it is reached. For this reason, photographs continue to be taken until the required degree of accuracy is reached. Accordingly, it can be stated that there is no control over whether the photo has been taken from the indicated position, but rather there is control over the contribution to reducing uncertainty.

The process is iterative in nature; in other words, it involves solving a problem by means of successive approximations to the solution, starting from an initial estimate. The program uses a calculation method during the process that can be analytical, it can be according to the Monte Carlo method or any calculation method that is feasible to apply.

Once we have reached the required degree of accuracy for a specific marker (2), we move on to the next one. If several markers appear in a photograph (2), several markers can be solved at the same time; so that the software eliminates those markers (2) that fulfil the degree of "required accuracy" from the process, considering them to be good.

A possibility has been envisaged where the software itself will discard the photographs that are not good or it offers indicators so that the user can reject them. As an alternative, all photographs enter the program and this program determines which photographs are better, thus being indicated as more "weighty" photographs, and it works more on these photographs than on the rest, making a weighted average of all of them.

Accordingly, a non-limiting practical exemplary embodiment will be indicated below, starting with the measurement of the part (1) represented in Figure 1 which, presumably, has a length "L" of two metres.

According to the commented formula:

$$\text{"Accuracy of the equipment"} = V1 + V2 \times L/1{,}000$$

In this case, the "accuracy of the equipment" would be ninety microns (90 $\mu$m).

Accordingly, the degree of accuracy that the user can request (degree of "required accuracy") must be comprised between 90 $\mu$m. and 1,000 $\mu$m. Within this range, the user may require the degree of accuracy ("required accuracy") that he or she deems appropriate. By way of non-limiting example, the "required accuracy" could be 270 microns (270 $\mu$m) as this value is between 90 $\mu$m. and 1,000 $\mu$m.

Starting with these values, so that the geometric figure "F" fulfils the first rule that establishes that the ratio between the axes (A1) and (A2) corresponds to the ratio between the "required accuracy" and the "accuracy of the equipment" or does not exceed it.

In this case, the ratio between the "required accuracy" and the "accuracy of the equipment" is 270 $\mu$m/ 90 $\mu$m = 3

Accordingly, the ratio between the axes (A1) and (A2) should be three or a value less than three, but never greater than three in order to fulfil this first rule.

Regarding the second rule relating to the size of the geometric figure "F", it must be fulfilled that the measurement of each semi-axis of the major axis (A1) and of the minor axis (A2) of the geometric figure "F" must not exceed the value of the "required accuracy", i.e., in this case two hundred and seventy microns (270 $\mu$m).

In this way, and if these two technical rules are fulfilled, the degree of "required accuracy" will have been reached for the marker (2) to be solved and it will be possible to move on to a new marker (2), and if these two rules are not simultaneously fulfilled, the process must continue at the same marker (2) until they are fulfilled.

## Claims

1.  A system for controlling the uncertainty of a photogrammetric meter, used to measure large parts, **characterised in that** it consists of creating a geometric figure "F" with at least one major axis (A1) and a minor axis (A2) by means of the corresponding software, with respect to figure "F", the program calculates with respect to the photograph or photographs taken by the user of at least one marker (2) arranged on the part (1) to be measured, the ratio between the major axis (A1) and the minor axis (A2) of the geometric figure "F" and the measurement of the semi-axes of said major axis (A1) and of the minor axis (A2), displaying said geometric figure "F" on the corresponding screen according to said calculation, which enables the user to know the degree of accuracy corresponding to the photographed marker (2) and thus control the uncertainty of the photogrammetric meter.

2.  The system for controlling the uncertainty of a photogrammetric meter, fully in accordance with the preceding claim, **characterised in that** the geometric figure "F" is preferably an ellipse, such that the ratio between the major axis (A1) and the minor axis (A2) of this geometric figure "F" must not exceed the value of the ratio between the "required accuracy" by the user and the "accuracy of the equipment", and the measurement of the semi-axes of said major axis (A1) and minor axis (A2) must not exceed the value of the "required accuracy", so that the system takes the degree of accuracy reached for each marker (2) as good.

3.  The system for controlling the uncertainty of a photogrammetric meter, fully in accordance with the first and second claims, **characterised in that** in one same photograph two or more markers (2) can be seen, the program analytically solving a geometric figure "F" for each marker (2).

4.  The system for controlling the uncertainty of a photogrammetric meter, fully in accordance with the first, second and third claims, **characterised in that** if several markers (2) are simultaneously solved, the software eliminates those markers (2) that fulfil the degree of "required accuracy" from the process, considering them to be good.

5.  The system for controlling the uncertainty of a photogrammetric meter, fully in accordance with the first claim, **characterised in that** the existence of one or more optical and/or acoustic indicators is envisaged which show the user that for each marker (2) the degree of "required accuracy" has been reached.

6.  The system for controlling the uncertainty of a photogrammetric meter, fully in accordance with the preceding claims, **characterised in that** the software processes all the photographs that enter the program and works to a greater extent on the photographs that are better, of greater weight, although it makes a weighted average of all the photographs.

7.  The system for controlling the uncertainty of a photogrammetric meter, fully in accordance with the sixth claim, **characterised in that** a possibility has been envisaged where the software itself will discard the photographs that are not good or it offers indicators so that the user can reject them.

8.  A process for controlling the uncertainty of a photogrammetric meter, carried out with the system of the preceding claims, **characterised in that** in a first phase, the user, with his or her photo camera "C", takes at least two consecutive photos of one same marker (2), from positions chosen according to his or her criteria and knowledge of the rules; and **in that** these two photos, taken from different points and with different orientation, are entered in the program that analytically calculates a geometric figure "F" of at least one major axis (A1) and one minor axis (A2), to solve that marker (2), so that if that geometric figure "F" fulfils the rule that the ratio between the major axis (A1) and the minor axis (A2) does not exceed the value of the ratio between the "required accuracy" by the user and the "accuracy of the equipment", and fulfils the rule that the measurement of the semi-axes of said major axis (A1) and the minor axis (A2) must not exceed the value of the "required accuracy", the process is completed.

9.  The process for controlling the uncertainty of a photogrammetric meter, fully in accordance with the preceding claim, **characterised in that** if the required degree of accuracy is not reached in the first phase, a second phase occurs, wherein the user takes at least one new photo, from another position chosen according to his or her criteria, and once this photograph from this second phase has been taken, the software calculates the new geometric figure "F" and displays it on the screen; so that if the degree of "required accuracy" is fulfilled, the process is completed, and if not, the user must reposition him or herself in a different position and take a new photograph, repeating the entire process until the degree of "required accuracy" is reached, within what is an iterative process.

10. The process for controlling the uncertainty of a photogrammetric meter, fully in accordance with the eighth and ninth claims, **characterised in that** if the first photograph of the second phase does not reach the degree of "required accuracy" for a marker (2), the user must take a second photograph, with the focal axis (6) of the camera "C" as close as possible to perpendicularity with respect to the major axis (A1) of the geometric figure "F" that appears on the screen corresponding to the first photograph of the second phase.

11. The process for controlling the uncertainty of a photogrammetric meter, fully in accordance with the eighth, ninth and tenth claims, **characterised in that** the taking of photographs of the second phase must be repeated according to an iterative process until the degree of "required accuracy" is reached and, in each new photograph, the camera "C" must be arranged with the focal axis (6) thereof as close as possible to perpendicularity with respect to the major axis (A1) of the geometric figure "F" that appears on the screen corresponding to the preceding photograph.

12. The process for controlling the uncertainty of a photogrammetric meter, fully in accordance with the eighth and ninth claims, **characterised in that** both in the first phase and in the second phase, in each photograph several markers (2) can be photographed, in which case several markers (2) are solved at the same time; so that the software eliminates those markers (2) that fulfil the degree of "required accuracy" from the process, considering them to be good.

13. The process for controlling the uncertainty of a photogrammetric meter, fully in accordance with the eighth and ninth claims, **characterised in that** it has been envisaged that when the software establishes that the degree of "required accuracy" has been reached for a marker (2), it provides the user with optical information, acoustic information or a combination of both; so that, preferably, by means of a colour code, the level of fulfilment of the degree of "required accuracy" is displayed on the screen.

FIG. 1

FIG. 2

**I**
START

**II**   2 PHOTOS
Solve a marker

**III**
Calculate uncertainty and
show its shape

**VI**
He takes photo again
User takes the photo according
to his criteria and *based* on
rules

**IV**
Has the desired
uncertainty been reached
(Ratio of the ellipse's axes +
size)?

NO

YES

**V**
END

# FIG. 3

FIG. 4

**FIG. 5**

FIG. 6

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 218 930 B (UNIV SHANDONG) 3 January 2020 (2020-01-03) | 1 | INV. G01B11/24 |
| Y | * abstract * * figures 1-8 * * paragraphs [0002], [0006] - [0020] * * paragraphs [0038] - [0135] * | 2,5,6, 9-11 | G01B21/04 G06T7/60 B23Q17/24 |
| X | JP 2004 139294 A (HITACHI LTD) 13 May 2004 (2004-05-13) | 1,3,4, 7-9,12, 13 | |
| Y | * abstract * * chapter "description of the preferred embodiments, [0014]-[0020], [0032]-[0051] * * figures 1,2 * | 2,5,6, 9-11 | |
| A | ZATARAIN M ET AL: "Raw part characterisation and automated alignment by means of a photogrammetric approach", CIRP ANNALS, vol. 61, no. 1, 3 April 2012 (2012-04-03), pages 383-386, XP028511159, ISSN: 0007-8506, DOI: 10.1016/J.CIRP.2012.03.137 [retrieved on 2012-04-03] * the whole document * | 1-13 | |

| | | | TECHNICAL FIELDS SEARCHED (IPC) |
|---|---|---|---|
| | | | G01B B23Q G06T |

The present search report has been drawn up for all claims

| Place of search | Date of completion of the search | Examiner |
|---|---|---|
| Munich | 25 October 2021 | Poizat, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 38 2490

25-10-2021

| Patent document cited in search report | | Publication date | Patent family member(s) | Publication date |
|---|---|---|---|---|
| CN 107218930 | B | 03-01-2020 | NONE | |
| JP 2004139294 | A | 13-05-2004 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2570236 A